(19) Europäisches Patentamt
European Patent Office
Office européen des brevets

(11) **EP 3 179 434 A1**

(12) **EUROPEAN PATENT APPLICATION**

(43) Date of publication:
**14.06.2017 Bulletin 2017/24**

(51) Int Cl.:
***G06Q 30/02*** *(2012.01)*    ***G06F 17/30*** *(2006.01)*

(21) Application number: **16203148.8**

(22) Date of filing: **09.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.12.2015 IL 24302615**

(71) Applicant: **Deutsche Telekom AG
53113 Bonn (DE)**

(72) Inventors:
• **Shapira, Bracha
8472811 Beer-Sheva (IL)**

• **Rokach, Lior
8496500 Omer (IL)**
• **Bar, Ariel
7740914 Ashdod (IL)**
• **Unger, Moshe
5228559 Ramat-Gan (IL)**
• **Chizi, Barak
7828101 Ashkelon (IL)**

(74) Representative: **Hoeger, Stellrecht & Partner
Patentanwälte mbB
Uhlandstrasse 14c
70182 Stuttgart (DE)**

(54) **DESIGNING CONTEXT-AWARE RECOMMENDATION SYSTEMS, BASED ON LATENT CONTEXTS**

(57)    A system for generating a context-aware recommendation for a target user and a target item based on latent context, which comprises a data collection unit configured to collect raw sensor data; a sensor data feature extractor, configured to extract features from the raw sensor data; a latent content extractor, configured to extract latent context from the feature; a data matcher, configured to merge all the collected information to create a rating model; a latent context matrix factorization component, configured to receive as an input the rating model schema and generate a recommendation model; and a Model evaluator, configured to evaluate the generated model accuracy.

Fig. 1

**Description**

**Field of the Invention**

The invention is in the field of recommendation systems. More specifically, the invention relates to designing context-aware recommendation systems, based on latent contexts.

**Background of the Invention**

The use of different portals for consuming content in a variety of fields is a standard in the modern life. Almost everybody have an account through which he can acquire content such as music, movies, books etc. In most portals there is usually a recommendation system which can recommend to the user on similar things according to the features of the items that are chosen. However, most of the recommendation systems today are naive recommendation system which can recommend to a person only if there is enough information about the user taste and only according to mutual users or items. For example, if a user choses to hear rock music, the recommendation system recommends on other songs which are also rock music and usually with some similar features according to the content of the music. Another aspect is that if two different users are consuming many things in mutual the system recognizes that they have similar taste and therefore the system probably recommends on some item that one user has chosen to the second user.

Traditional context-aware recommendation systems aim at recommending items while considering user context (e.g. weather, location, time) and require explicit contexts. Obtaining these contexts is a difficult task since it requires the user to share his context consistently - a task that users will prefer to avoid due to time-consuming effort and privacy issues.

It is therefore an object of the present invention to use latent context patterns extracted from raw sensor data in order to build context-aware recommendation models without necessarily using explicit context.

**Summary of the invention**

In one aspect the present invention relates to a method for generating a context-aware recommendation for a target user and a target item based on latent context, comprising the steps of: collecting to user item data and raw data from sensors located on the devices used by said target user; extracting relevant features from said collected raw data; extracting latent content from said extracted relevant features; merging the data collected to construct a rating model schema; building a unique matrix factorization recommendation model which receives as an input said rating model schema and generating a recommendation model; evaluating the accuracy of said recommendation model; and generating a recommendation to said target user and said target item according to said latent content.

In an embodiment of the invention, the method further comprising the steps of collecting information regarding the preferences of users toward items and collecting explicit context information.

In an embodiment of the invention, the rating model schema comprises the step of adding a new set of contextual variables to the explicit variable, and wherein a single rating instance in the collected data has the following structure:

$$r_{u,i,c_1,c_2...,c_k,l_1,l_2,...,l_d},$$

where: r is the actual rating score from a given range;
$u \in U$ is the user id of m users;
$i \in I$ is the items id of n items;
c1... ck are set of explicit contextual conditions, each one is a nominal variable from a finite set of possible $c_i \in C_i$ values , and
l1... ld are a set of numeric latent context attributes.

In an embodiment of the invention, the matching of all the collected components into a unified rating model and schema is done by user/item ids and timestamps.

In an embodiment of the invention, the generation of recommendation model by the Latent Context Matrix Factorization Model comprises the steps of:

Determining a rating prediction rule, taking into consideration the effect of latent contexts when estimating the predicted rating of a target user on available items;
defining an optimization problem with the goal to minimize the squared error between observed rating data and the predicted one; and introducing a gradient decent algorithm to solve said optimization problem.

In an embodiment of the invention, the rating prediction rule is determined according to the following:

$$r^{\wedge}_{u,i,c_1,..,c_k,l_1,...,l_d} = b_u + b_i + v_u q_i^T + \sum_{j=1}^{k} b_{ic_j} + \sum_{j=1}^{d} b_{ij}\, l_j$$

wherein:

r is the estimation of rating of user u with item i under explicit contexts c1..ck and latent contexts l1...ld

$b_u$ is the baseline estimator for user u;

$b_i$ is the baseline estimator for item $i$;

$v_u$ and $q_i$ are MF latent factor vectors for the given user and item respectively;

These vectors maps users and items on a set of *f* common latent factors space, when the multiplication of $v_u q_i^T$ is an approximation of the original and sparse rating matrix;

$b_{ic_j}$ is the rating bias of a given item *i* under the explicit context condition $c_j$;

$b_{ij}$ denotes the rating bias of a given item *i* for the *j*th latent context attribute $j \in \{1.. d\}$.

In an embodiment of the invention, the optimization problem is solved by an iterative stochastic gradient decent learning algorithm comprising the steps of:

receiving as an input:

*R* - a rating data set with explicit and latent context.

*f* - latent factors vector size for the MF component.

{|C1|,...|$C_k$|} - a vector specifying for every explicit context condition its cardinality (i.e.: how many categorized values this condition contains)

d - the size of the latent context attributes.

λ - the regularization parameter.

Y - the learning step of the gradient decent algorithm. Iterations - number of learning iterations; and

δ - early stop criteria threshold, determining the minimal required improvement on RMSE (Root Mean Square Error) measures between two successive iterations;

initializing the learning variables of the model wherein the baseline estimator of the items are set to be their average rating while all other learning parameters are set to random values between -0.001 to 0.001; iteratively updating different variables in the model to better represent the observed data;

measuring the RMSE of the current model and comparing it to the one in the previous iteration;

continuing the iterations until exceeding the number of requested iterations defined in the input parameters or until the RMSE improvement of the current iteration compared to the previous one on the training dataset is below a predefined threshold;

returning the model with the model obtained by the iteration with the minimal calculated RMSE.

In an embodiment of the invention, the model evaluator evaluates the accuracy of the recommendation model by splitting a dataset into a train set and a test set, and wherein the following four measurements are calculated:

RMSE (Root Mean Square Error), which measures the difference between the actual and the predicted rating, while penalizing large errors;

Hit@K metric, which measures the percentage of hits among a top k recommendations, where a hit is defined as an item that appears in the test set profile of a user and was recommended to said user among the top-K recommendations;

"simple average" metric, which calculates the average position indexes among the top-K recommendations; and

NDCG (Normalized Discounted Cumulative Gain), which is a weighted average on the position indexes among the top-K list, when the weights are decreased as a function of the rank (position) of the recommendation, and therefore applies a discount factor for "hits" with low rankings.

The present invention is also related to a system for generating a context-aware recommendation for a target user and a target item based on latent context, comprising:

data collection unit for collecting raw sensor data
sensor data feature extractor, for extracting features from the raw sensor data;
latent content extractor for extracting latent context from said feature;
data matcher for merging all the collected information to create a rating model;
a latent context matrix factorization model which receives as an input said rating model schema and generating a recommendation model; and
a model evaluator for evaluating the generated model accuracy.

In an embodiment of the invention, the system of the invention further comprising user item data collection unit and explicit context collection unit for collecting data.

## Brief description of the drawings

- Fig. 1 schematically shows the main components of the system of the invention;
- Fig. 2 schematically shows a Comparison between Explicit and Latent Contexts;
- Fig. 3 schematically shows the algorithm of the Latent Context Matrix Factorization; and
- Fig. 4 schematically shows an accuracy Comparison between Recommendation Models.

## Detailed Description

The present invention proposes a system for utilizing latent context patterns in order to generate context-aware recommendation models.

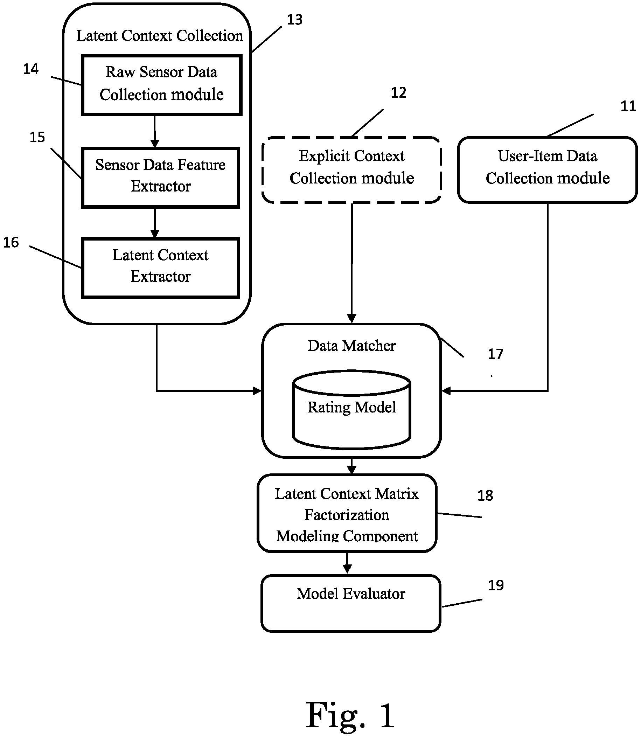

Fig. 1 schematically describes the software modules adapted to execute the steps of the method of the present invention, for extracting latent contexts and utilizing them to enrich recommendation systems according to an embodiment of the invention. User-Item data collection module 11 is a software module for performing data collection in every recommendation system. The User-Item data collection 11 module collects information regarding the preferences (e.g.,: ratings) of users towards the items that the system wishes to recommend. Explicit context collection module 12, is a software module for collecting information describing under which circumstances each record of user-item interaction was collected, e.g.: a weather condition, when a user gave a positive rating score to a certain item. This is a standard information collection process in context-aware recommendation systems and is optional in the present invention. Latent context data collection module 13, is a software module for executing a unique process which is responsible to discover latent or hidden contextual patterns. This process includes three steps: First step: raw sensor data is collected by a Raw Sensor Data Collection module 14 (e.g. on mobile devices it may collect accelerometer, WiFi, light and microphone information;) Second step: a set of features is extracted from the raw data by a Sensor Data Feature Extractor 15 (e.g.: calculating statistics such as min, max and average on the collected accelerometer records); Third step: latent contexts is extracted from these features by a Latent Context Extractor 16. Latent context are described by numeric vectors which capture relationships among the sensor-based features. For this task, unsupervised methods are applied such as Deep Learning (Autoencoder) and PCA (Principal Component Analysis). The outputs of all these processes are merged using the Data Matcher 17 to construct a rating model schema, which captures the user-item interactions, latent contexts and explicit ones. The present invention proposes building a unique matrix factorization recommendation model in step 18 which takes as an input the merged rating model schema. A Model Evaluator 19 measures the accuracy of the generated recommendation model. The final result of the system proposed by the present invention is a recommendation to the target user and the target item, according to the extracted latent content.

The following paragraphs describe every step of the method in more details.

## User-Item Data Collection

The recommendation process aimed at predicting ratings, typically starts with the specification of the initial set of ratings that is either explicitly provided by the users or is implicitly inferred by the system. Once these initial ratings are specified, a recommender system tries to estimate the rating function R: User×Item→Rating. The rating can be provided explicitly by the users (e.g.: giving a rating score on a 1..5 scale, or tagging items with likes and dislikes). Another option to infer a rating is by examining history events (e.g.: "buy", "click", "add to chart", etc) which associated to a certain customer towards the given item. In either approach the end result of this process is a mapping of user-item pair towards a rating score at a certain range.

Explicit Context Collection

The area of Context-Aware Recommender Systems (CARS) deals with modeling and predicting user tastes and preferences by incorporating available contextual information into the recommendation process as explicit additional categories of data. These long-term preferences and tastes are usually expressed as ratings and are modeled as the function of not only items and users, but also of the explicit context. In other words, ratings are defined with the rating function as R: User x Item x Context → Rating

There are several definitions for contextual information and their form of representation. One option is to define the contextual information with a set of contextual dimensions K, each contextual dimension K is being defined by a set of q attributes K= ($K^1$ , ... ,$K^q$) having a hierarchical structure and capturing a particular type of context, such as Time, or location. Those factors describe the circumstances and surroundings on which the data was collected, e.g.: high-level location conditions ("at home", "at work", etc.), weather conditions ("sunny", "cloudy", "raining", etc.). Explicit context can improve the accuracy of recommendation process as it may discover new patterns regarding the user profile and tastes which are not possible to identify with traditional recommendation models. However, in most time this information is unavailable since it requires the user to share his context consistently (a task which users wish to avoid). The present invention aims at shifting from explicit context towards latent contexts which their availability is much higher. Nonetheless, the recommendation model of the present invention as described below is capable of combining both explicit and latent context, so collection of explicit contexts is an optional process in the present invention.

Latent Context Collection

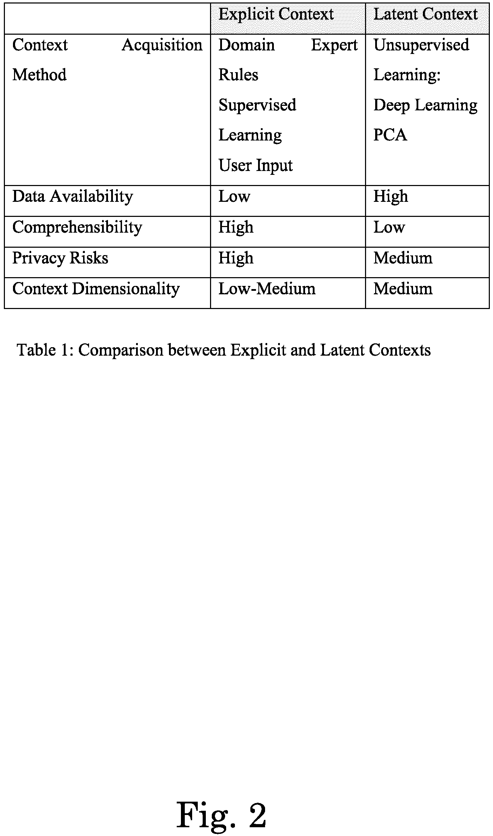

Latent contexts are discovered by applying un-supervised learning procedures (e.g.: clustering, deep-learning and PCA) on raw data (such as probes of mobile devices' sensors). These methods are well known in the art and therefore will note be described. Latent context attributes and explicit context are distinguished in terms of their acquisition method, their availability and readability, potential for privacy issues, and structure as summarized in the table shown in Fig. 2. The main differences are as follows:

Explicit contexts are mainly acquired by applying one or more of the following: relying on set of rules defined by domain experts, a supervised learning model which infers the current context of the user, or from the user explicit input regarding the current context. Latent context on the other hand can be obtained by applying unsupervised learning techniques on available raw data (e.g.: mobile sensors).

Obtaining explicit context by either of the methods described in the previous paragraph is a resource demanding task since it requires either inputs from users, the knowledge from a domain expert, or collecting labeled contextual information. On the other hand, obtaining latent context is considerably less demanding since it works on unlabeled data, which can easily be collected from available sensors, and does not require an explicit input from the user.

Explicit contexts have much higher degree of comprehensibility by human experts and users (compared to the latent ones). For example a weather condition is very straightforward and is easy to understand rather than the numeric vector of latent contexts. However, CARS algorithms which extend CF (Collaborative Filtering - filtering information by using the recommendations of other people, based on the idea that people who agreed in their evaluation of certain items in the past are likely to agree again in the future) methods do not always require the knowledge of the meaning of the actual context for the prediction and recommendation tasks.

The high degree of readability of the explicit context may raise privacy issues, since the recommendation service is fully aware to the exact context of the user. On the other hand, the latent contexts values are obfuscated and reveal only hidden contextual information about the user so in this sense less sensitive.

The process or raw data collection and feature extraction may result a large set of retrieved features. The process of extracting latent context attributes by the method of the present invention reduce their dimensionality, however in most scenarios the number of latent context variables is still larger than the number of explicit features. This may affect time and space complexity of models which use this contextual information. However, during the experiments with the methods of the present invention, it was observed that it is possible to train accurate recommendation models with relatively small number of latent context variables

Data Matcher and Rating Model

The schema or structure of this rating model is a result of matching and merging the user-item profiles, and the latent and explicit contexts from the previous section.

Rating models of traditional Collaborative Filtering (CF) take into consideration only the interactions (ratings, clicks, buys etc.) between users and items, without any consideration regarding the context in which the interaction took place. Supervised context-aware recommendation systems add labels to some explicit contextual information about the given ratings referred to also as conditional factors describing under which circumstances the information was collected, e.g.,: a weather context may include "sunny", "cloudy", and "raining" conditions. The rating model proposed by the present invention, adds a new set of contextual variables to the explicit ones. These variables are called "latent context attributes", since they are learned automatically by utilizing unsupervised learning techniques on available raw data (e.g.: set of features from mobile deceives' sensors). These latent context attributes describe the relationships and hidden contextual patterns among the original features; in particular, in order to extract them the method of the present invention applies Deep Leaning and PCA techniques. A single rating instance in the collected data has the following structure: $r_{u,i,c_1,c_2...,c_k,l_1,l_2,...,l_d}$, where: r is the actual rating score from a given range (e.g.: 1,2,3,4,5); $u \in U$ is the user id of m users; $i \in I$ is the items id of n items; c1... ck are set of explicit contextual conditions, each one is a nominal variable from a finite set of possible values $c_i \in C_i$, e.g.: $C_{time\ in\ a\ day}$ = Morning,Afternoon,Evening}; and finally a set of numeric latent context attributes l1... ld. From practical point of views the matching of all these components into a unified rating model and schema is by user/item ids and timestamps.

Latent Context Matrix Factorization Model

The recommendation model proposed by the present invention is a contextual modeling recommendation algorithm. In the next paragraphs a detailed design of the model, is presented, including: 1) the rating prediction rule, taking into consideration the effect of latent contexts when estimating the predicted rating of a target user on available items; 2) defining an optimization problem with the goal to minimize the squared error between observed rating data and the predicted one; and 3) introducing a gradient decent algorithm to solve this optimization problem.

The rating prediction rule model appears in Equation 1. Given a target user id (u), a target item id (i), the set of categorized explicit contexts ($c_1..c_k$). and a set of observed latent context attributes ($l_1..l_d$) The prediction rule is a linear combination of several components, each contributing to the predicted rating value a different aspect of the available data.

Equation (1):

$$\hat{r}_{u,i,c_1,..,c_k,l_1,...,l_d} = b_u + b_i + v_u q_i^T + \sum_{j=1}^{k} b_{ic_j} + \sum_{j=1}^{d} b_{ij}\, l_j$$

In more details the components in the prediction rule include the following:

$b_u$ is the baseline estimator for user u. This parameter captures the user rating bias. For example, a critical user (user who tends to give in overall low rating scores) will have a low baseline.

$b_i$ is the baseline estimator for item $i$. This is symmetric to $b_u$, but from the items' perspective. This parameter also indicates the degree of popularity or likelihood of the given item.

$v_u$ and $q_i$ are traditional MF latent factor vectors for the given user and item respectively. These vectors maps users and items on a set of $f$ common latent factors space, when the multiplication of $v_u q_i^T$ is an approximation of the original and sparse rating matrix.

$b_{icj}$ is the rating bias of a given item $i$ under the explicit context condition $c_j$, e.g.: if a certain restaurant is more popular on warm days, under a the context $C_{wheater}$ = "Hot", a possible bias value can be 0.4, indicating that the ratings of this restaurant are boosted by 0.4 when the weather is hot. In scenarios where the conditional context is missing, the bias equals to 0, causing no effect on the predicted rating.

$b_{ij}$ denotes the rating bias of a given item $i$ for the $j^{th}$ latent context attribute $j \in \{1.. d\}$. The latent context values are continues numbers on the range of $\{0..1\}$, thus, the vector of observed latent context attributes ($l_1..l_d$) is multiplied by the bias estimators in order to fully reflect the impact of the observed attributes on the predicted rating. In scenarios where the latent context is missing, this part of the calculation is removed and the total rating is not affected.

In order to provide rating predictions, the model's variables must be learned. The second step for establishing the recommendation model is to define an optimization problem (presented on Equation 2), which aims at minimizing the squared error between the predicted rating according to the prediction rule and the actual rating, on a given rating data set R. In order to minimize overfitting issues we add a regularization component, which is controlled by the parameter $\lambda$. The multiplication of $\lambda$ by the volume of the learned parameters penalizes conditions in which these variables are to fit to the observed data.

Equation (2):

$$min_{v*,q*,b*} \sum_{r \in R}(r_{u,i,c_1,..,c_k,l_1,...,l_d} - b_u - b_i - v_u q_i^T - \sum_{j=1}^{k} b_{ic_j} - \sum_{j=1}^{d} b_{ij} \, l_j)^2 +$$

$$\lambda(||v_u||^2 + ||q_{ui}||^2 + \sum_{j=1}^{k} b_{ic_j}^2 + \sum_{j=1}^{d} b_{ij}^2)$$

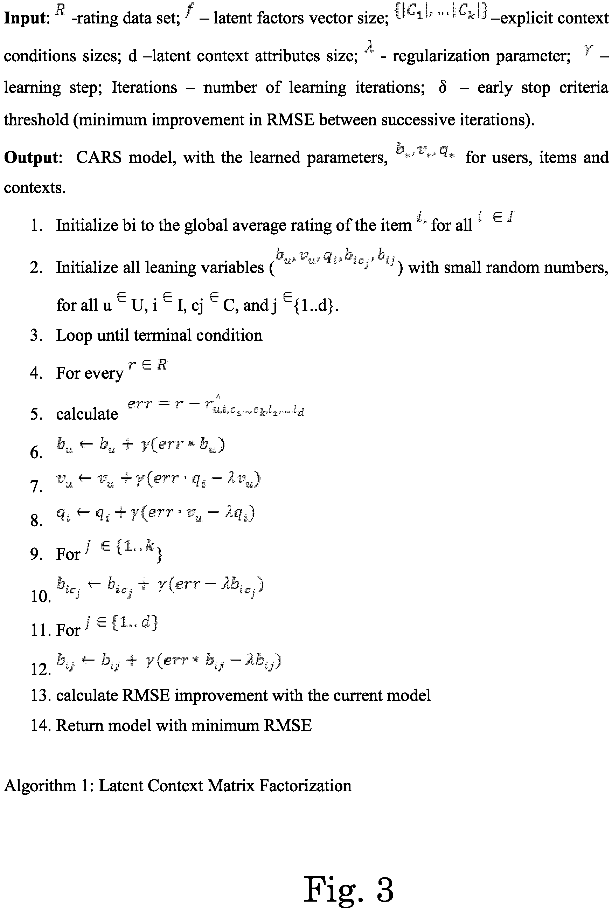

To solve this optimization problem, an iterative stochastic gradient decent learning algorithm is applied which is presented in Fig. 3. The input for the algorithm is

$R$ - a rating data set with explicit and latent context.

$f$ - latent factors vector size for the MF component.

$\{|C_1|,...|C_k|\}$ - a vector specifying for every explicit context condition its cardinality (i.e.: how many categorized values this condition contains)

d - the size of the latent context attributes.

$\lambda$ - the regularization parameter.

Y - the learning step of the gradient decent algorithm.

Iterations - number of learning iterations.

$\delta$ - early stop criteria threshold, determining the minimal required improvement on RMSE measures between two successive iterations.

The output of the algorithm is the learned model with values of $b_*$, $v_*$, $q_*$ for users, items and contexts.

The algorithm illustrated in Fig. 3 is the latent context matrix factorization and comprises the following steps:

Step 1, In lines 1-2 the learning variables of the model is initialized: the baseline estimators of the items are set to be their average ratings, while all other learning parameters are set to small random values (in particular, between the range {-0.001...0.001}). Next, step 2, (line 3) an iterative process which includes a learning (lines 4-12) and an evaluation process (line 13) is started. The learning process updates different variables in the model to better represent the observed data, while the evaluation process measures the RMSE (root mean square error) of the current model and compares it to the one in the previous iteration. This learning-evaluation cycle continues until either the number of requested iterations is exceeded (specified by the iterations input parameter) or if the RMSE improvement of the current iteration compared to the previous one on the training dataset is below the threshold $\delta$. The learning procedure of each of the iterations requires iterating all over the ratings $R$ (line 5). For each rating in $R$, first the error (denoted by err) between the actual rating and the predicted one according to the prediction rule from equation 1 is calculated. In lines 6-8 the gradient steps for the standard MF components (user baseline estimator, and the user/item $f$-latent factors vectors) is performed. In lines 9-10 the gradient steps for the $k$-explicit context conditions bias variables is performed. Finally, in lines 11-12 the gradient steps for the $d$-latent context bias variables is applied. With the end of the learning-evaluation cycles, the model (values of $b_*, v_*, q_*$ for users, items and contexts) obtained by the iteration with the minimal calculated RMSE is returned.

Model Evaluator

This component is responsible for evaluating the generated model from previous steps in terms of accuracy. Evaluation is performed by splitting the dataset into train and test sets. The recommendation model is leaned only on the training set, and it is evaluated on the test set.

This component evaluates the accuracy of each of the models, using two measures of prediction accuracy and two measures of the quality of the ranking of the results. These four measures are calculated separately in order to evaluate the results of the models in terms of ranking quality and recommendation accuracy. RMSE (root mean square error), which measures the difference between the actual and the predicted rating is used, while penalizing large errors. In addition the accuracy of the top-N recommendation list is also evaluated, using the Hit@K metric. This metric measures the percentage of hits among the top k recommendations, where a hit is defined as an item that appears in the test-set profile of the user and was recommended to him that among the top-K recommendations. the performances of the model is evaluated with two ranking methods: the "simple aver-age" metric calculates the average position indexes among the top-K recommendations; and NDCG (Normalized Discounted Cumulative Gain) which is a weighted average on the position indexes among the top-K list, when the weights are decreased as a function of the rank (position) of the recommendation, and therefore applies a discount factor for "hits" with low rankings.

Splitting to train and test is performed in two strategies: The first is a traditional random K-Fold cross validation (typically a 80:20 train: test splitting ratio). The second is a time-based evaluation strategy, where the splitting is done according to the ratings timestamps: earlier records are selected for the train set, while later ones were selected for the test set, typically the splitting ratio was 80:20 for training and test, respectively.

POI (Points Of Interest) Recommendation Use Case

As a case study, data obtained from mobile devices' sensors was analyzed, and the effects on the accuracy of context-aware recommender systems were examined. The contribution on a system that recommends points of interest (POIs) is demonstrated, e.g.,: restaurants, bars, cafés, entertainment centers, etc. The idea is to model the context for which the POIs are relevant and to use it in the recommendation process using the algorithm described above. In order to obtain data for evaluation of the algorithm, an Android application which monitors the user's location and recommends POIs nearby was developed. The application displays recommendations on the device allowing the user to provide feedback about them. Possible feedbacks were "like" and "dislike" or "checking in". "Like" and "checking in" are positive indications that the recommendations are currently relevant to the users, where "dislike" is negative. For each provided feedback, the application recorded various mobile sensors (e.g.,: GPS, microphone, light, WiFi networks etc.) to capture some level of contextual information about the user, which may determine her situation when preferring (or not) a specific POI.

44 undergraduate students in an Israeli University from different faculties participated in the experiment during 4 weeks, recording on average 367 POIs' preferences a day, their average age was 25 years and the majority of them owned Samsung Galaxy S4, Nexus 5 or LG G2 mobile devices. Data about 164 POI's was collected in the town where the University is located. Overall the system recorded 3533 events (like, dislike, check-in) and respectively the same number of context data records. In most real-life commercial recommendation systems, the availability of explicit rating is very low since users do not tend to rate items they acquire very. On the other hand, implicit feedback is much more common. Most of the implicit feedbacks are based on events or transactions, e.g.,: buy, click, play, add to cart, etc. The majority of these events are positive, since users usually do not bother to rate items that they don't like or consume. Therefore, in many scenarios, the recommendation system is required to train solely on positive feedback the user has shared. To simulate this scenario, the following evaluation based only the positive feedback events (like and check-ins) which were collected on the field experiments was performed.

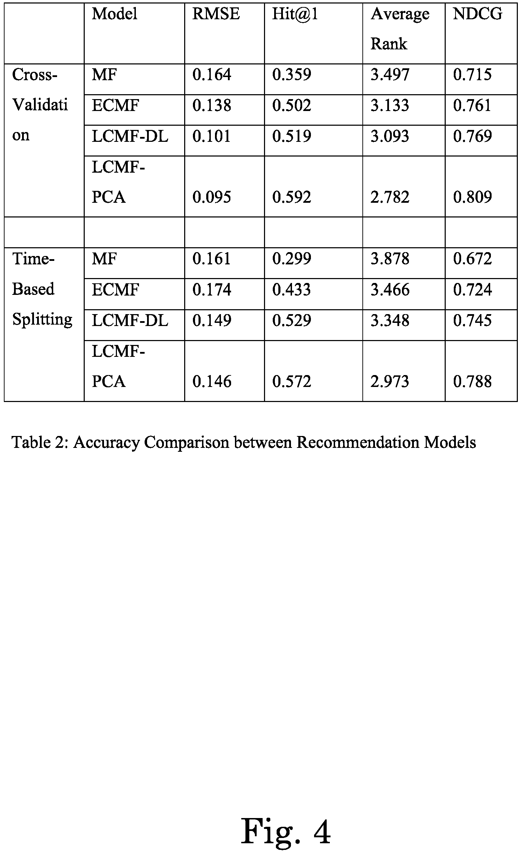

The suggested model was evaluated against two baseline models: a traditional non contextual matrix factorization model (denoted by MF) and an explicit context matrix factorization model (denoted by ECMF). The explicit context model used the following contexts: time-in-day (morning, afternoon, evening, night); time-in-week (weekday, weekend); and weather (cold, warm, hot). The latent contexts were derived in two ways: first, deep-learning using auto-encoder (denoted by LCMF-DL); second PCA based model (denoted by LCMF-PCA). Fig. 4 shows a table which summarize the accuracy results of the different models for the cross-validation and time-based splitting evaluation strategies. As it can be observed the suggest models were able to improve all accuracy measures between 3.81% and 46.41%.

**Claims**

1. A method for generating a context-aware recommendation for a target user and a target item based on latent context, comprising the steps of:

   a. Collecting, by a User-Item Data Collection module user item data and by a Raw Sensor Data Collection module, raw data from sensors located on the devices used by said target user;
   b. Extracting, by a Sensor Data Feature Extractor, relevant features from said collected raw data;
   c. extracting latent content from said extracted relevant features; and
   d. merging the data collected to construct a rating model schema;
   e. building a unique matrix factorization recommendation model which receives as an input said rating model schema and generating a recommendation model;
   f. evaluating the accuracy of said recommendation model; and
   g. generating, by a Model Evaluator, a recommendation to said target user and said target item according to said latent content.

2. A method according to claim 1, further comprising the steps of collecting information regarding the preferences of users toward items and collecting explicit context information.

3. A method according to claim 1, wherein the rating model schema comprises the step of adding a new set of contextual variables to the explicit variable, and wherein a single rating instance in the collected data has the following structure:

$r_{u,i,c_1,c_2...,c_k,l_1,l_2,...,l_d}$,
where: r is the actual rating score from a given range;
$u \in U$ is the user id of m users;
$i \in I$ is the items id of n items;

c1... ck are set of explicit contextual conditions, each one is a nominal variable from a finite set of possible values $c_i \in C_i$, and l1... ld are a set of numeric latent context attributes.

4. A method according to claim 1, wherein the matching of all the collected components into a unified rating model and schema is done by user/item ids and timestamps.

5. A method according to claim 1, wherein the generation of recommendation model by the Latent Context Matrix Factorization Model comprises the steps of:

   a. Determining a rating prediction rule, taking into consideration the effect of latent contexts when estimating the predicted rating of a target user on available items;
   b. defining an optimization problem with the goal to minimize the squared error between observed rating data and the predicted one; and
   c. introducing a gradient decent algorithm to solve said optimization problem.

6. A method according to claim 5 wherein the rating prediction rule is determined according to the following:

$$\hat{r}_{u,i,c_1,..,c_k,l_1,...,l_d} = b_u + b_i + v_u q_i^T + \sum_{j=1}^{k} b_{ic_j} + \sum_{j=1}^{d} b_{ij}\, l_j$$

wherein:

   r is the estimation of rating of user u with item i under explicit contexts c1..ck and latent contexts l1...ld
   $b_u$ is the baseline estimator for user u;
   $b_i$ is the baseline estimator for item $i$;
   $v_u$ and $q_i$ are MF latent factor vectors for the given user and item respectively;
   These vectors maps users and items on a set of f common latent factors space, when the multiplication of $v_u q_i^T$ is an approximation of the original and sparse rating matrix;
   $b_{ic_j}$ is the rating bias of a given item $i$ under the explicit context condition $c_j$;
   $b_{ij}$ denotes the rating bias of a given item $i$ for the $j^{th}$ latent context attribute $j \in \{1.. d\}$.

7. A method according to claim 5, wherein the optimization problem is solved by an iterative stochastic gradient decent learning algorithm comprising the steps of:

   a. receiving as an input:

      $R$ - a rating data set with explicit and latent context.
      $f$ - latent factors vector size for the MF component.
      $\{|C_1|,...|C_k|\}$ - a vector specifying for every explicit context condition its cardinality (i.e.: how many categorized values this condition contains)
      d - the size of the latent context attributes.
      λ - the regularization parameter.
      Y - the learning step of the gradient decent algorithm.
      Iterations - number of learning iterations; and
      δ - early stop criteria threshold, determining the minimal required improvement on RMSE measures between two successive iterations;

   b. initializing the learning variables of the model wherein the baseline estimator of the items are set to be their average rating while all other learning parameters are set to random values between -0.001 to 0.001;
   c. iteratively updating different variables in the model to better represent the observed data;
   d. measuring the RMSE of the current model and comparing it to the one in the previous iteration;
   e. continuing the iterations until exceeding the number of requested iterations defined in the input parameters or until the RMSE improvement of the current iteration compared to the previous one on the training dataset is below a predefined threshold;

f. returning the model with the model obtained by the iteration with the minimal calculated RMSE.

8. A method according to claim 1, wherein the model evaluator evaluates the accuracy of the recommendation model by splitting a dataset into a train set and a test set, and wherein the following four measurements are calculated:

a. Root Mean Square Error, which measures the difference between the actual and the predicted rating, while penalizing large errors;
b. Hit@K metric, which measures the percentage of hits among a top k recommendations, where a hit is defined as an item that appears in the test set profile of a user and was recommended to said user among the top-K recommendations;
c. "simple average" metric, which calculates the average position indexes among the top-K recommendations; and
d. Normalized Discounted Cumulative Gain, which is a weighted average on the position indexes among the top-K list, when the weights are decreased as a function of the rank (position) of the recommendation, and therefore applies a discount factor for "hits" with low rankings.

9. A system for generating a context-aware recommendation for a target user and a target item based on latent context, comprising:

a. A data collection unit configured to collect raw sensor data;
b. a sensor data feature extractor, configured to extract features from the raw sensor data;
c. a latent content extractor, configured to extract latent context from said feature;
d. a data matcher, configured to merge all the collected information to create a rating model;
e. a latent context matrix factorization component configured to receive as an input said rating model schema and generate a recommendation model; and
f. a Model evaluator, configured to evaluate the generated model accuracy.

10. A system according to claim 9 further comprising user item data collection unit and explicit context collection unit for collecting data.

Fig. 1

|  | Explicit Context | Latent Context |
|---|---|---|
| Context Acquisition Method | Domain Expert Rules Supervised Learning User Input | Unsupervised Learning: Deep Learning PCA |
| Data Availability | Low | High |
| Comprehensibility | High | Low |
| Privacy Risks | High | Medium |
| Context Dimensionality | Low-Medium | Medium |

Table 1: Comparison between Explicit and Latent Contexts

# Fig. 2

**Input**: $R$ -rating data set; $f$ – latent factors vector size; $\{|C_1|, ... |C_k|\}$ –explicit context conditions sizes; d –latent context attributes size; $\lambda$ - regularization parameter; $\gamma$ – learning step; Iterations – number of learning iterations; $\delta$ – early stop criteria threshold (minimum improvement in RMSE between successive iterations).

**Output**: CARS model, with the learned parameters, $b_*, v_*, q_*$ for users, items and contexts.

1. Initialize bi to the global average rating of the item $i$, for all $i \in I$

2. Initialize all leaning variables ($b_u, v_u, q_i, b_{ic_j}, b_{ij}$) with small random numbers, for all u $\in$ U, i $\in$ I, cj $\in$ C, and j $\in$ {1..d}.

3. Loop until terminal condition

4. For every $r \in R$

5. calculate $err = r - \hat{r}_{u,i,c_1...c_k,l_1,...,l_d}$

6. $b_u \leftarrow b_u + \gamma(err * b_u)$

7. $v_u \leftarrow v_u + \gamma(err \cdot q_i - \lambda v_u)$

8. $q_i \leftarrow q_i + \gamma(err \cdot v_u - \lambda q_i)$

9. For $j \in \{1..k\}$

10. $b_{ic_j} \leftarrow b_{ic_j} + \gamma(err - \lambda b_{ic_j})$

11. For $j \in \{1..d\}$

12. $b_{ij} \leftarrow b_{ij} + \gamma(err * b_{ij} - \lambda b_{ij})$

13. calculate RMSE improvement with the current model

14. Return model with minimum RMSE

Algorithm 1: Latent Context Matrix Factorization

# Fig. 3

|  | Model | RMSE | Hit@1 | Average Rank | NDCG |
|---|---|---|---|---|---|
| Cross-Validation | MF | 0.164 | 0.359 | 3.497 | 0.715 |
|  | ECMF | 0.138 | 0.502 | 3.133 | 0.761 |
|  | LCMF-DL | 0.101 | 0.519 | 3.093 | 0.769 |
|  | LCMF-PCA | 0.095 | 0.592 | 2.782 | 0.809 |
|  |  |  |  |  |  |
| Time-Based Splitting | MF | 0.161 | 0.299 | 3.878 | 0.672 |
|  | ECMF | 0.174 | 0.433 | 3.466 | 0.724 |
|  | LCMF-DL | 0.149 | 0.529 | 3.348 | 0.745 |
|  | LCMF-PCA | 0.146 | 0.572 | 2.973 | 0.788 |

Table 2: Accuracy Comparison between Recommendation Models

# Fig. 4

Europäisches
Patentamt

European
Patent Office

Office européen
des brevets

# EUROPEAN SEARCH REPORT

Application Number

EP 16 20 3148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/100321 A2 (MICROSOFT CORP [US]) 26 June 2014 (2014-06-26) * paragraph [0003] * ----- | 1-10 | INV. G06Q30/02 G06F17/30 |
| A | WO 2012/034606 A2 (TELEFONICA SA [ES]; AMATRIAIN RUBIO XABIER [ES]; OLIVER RAMIREZ NURIA) 22 March 2012 (2012-03-22) * the whole document * ----- | 1-10 | |

TECHNICAL FIELDS
SEARCHED (IPC)

G06Q
G06F

The present search report has been drawn up for all claims

| Place of search | Date of completion of the search | Examiner |
|---|---|---|
| The Hague | 13 April 2017 | Stan, Johann |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    .......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 20 3148

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2017

| Patent document cited in search report | | Publication date | Patent family member(s) | | Publication date |
|---|---|---|---|---|---|
| WO 2014100321 | A2 | 26-06-2014 | CN 104903885 | A | 09-09-2015 |
| | | | EP 2936339 | A2 | 28-10-2015 |
| | | | US 2014181121 | A1 | 26-06-2014 |
| | | | WO 2014100321 | A2 | 26-06-2014 |
| WO 2012034606 | A2 | 22-03-2012 | NONE | | |

For more details about this annex : see Official Journal of the European Patent Office, No. 12/82

EPO FORM P0459